# EUROPEAN PATENT SPECIFICATION

(11) **EP 4 542 345 B1**
(45) Date of publication and mention of the grant of the patent: **08.07.2026**
(21) Application number: 24202965.0
(22) Date of filing: 26.09.2024
(51) Int. Cl.: G06F 3/01, G06T 19/00

(54) **DATA PROCESSING METHOD AND SYSTEM**
DATENVERARBEITUNGSVERFAHREN UND -SYSTEM
PROCÉDÉ ET SYSTÈME DE TRAITEMENT DE DONNÉES

(30) Priority: 19.10.2023 GB 202315985
(43) Date of publication of application: 23.04.2025
(73) Proprietor: Sony Interactive Entertainment Inc., Tokyo 108-0075 (JP)
(72) Inventor: AMADORI, Pierluigi Vito, London W1F 7LP (GB); DUNN, Lauren, London W1F 7LP (GB); MONTI, Maria Chiara, London W1F 7LP (GB)
(74) Representative: D Young & Co LLP

(56) References cited:
- US-A1- 2015 123 966
- US-B1- 10 176 636

## Description

### BACKGROUND OF THE INVENTION

### Field of the invention

The present invention relates to a data processing method and system for generating images of a virtual environment.

### Description of the Prior Art

It is often desirable for content, such as a video game or film, to be updated after its release, for example to improve the graphics or personalise the content for users.

Such content updates are typically achieved by remastering the content. However, a content remastering process is frequently complex and has a high associated computational cost; in many cases content may need to be remade entirely, due to the difficulty of updating individual parts of the content in a manner which retains compatibility.

An alternative approach is the use of customisable texture packs that are downloaded to the device rendering the content to use in place of the default textures, thus changing the appearance of the content. However, the processing power and memory required in order to use such texture packs, in particular if the updated texture packs are of a particularly high quality, can be excessively high for the user's rendering device. Thus, users with less powerful devices are often unable to use such texture packs. Further, even users with more powerful devices may experience lag or rendering errors as a result of the processing and memory load associated with using such texture packs.

The present invention seeks to mitigate or alleviate these problems, and to provide improved rendering techniques.

Previously proposed arrangements are disclosed in US 10 176 636 B1 and US 2015/123966 A1.

### SUMMARY OF THE INVENTION

Various aspects and features of the present invention are defined in the appended claims and within the text of the accompanying description and include at least:
- In a first aspect, a data processing method for generating images of a virtual environment is provided in accordance with claim 1.
- In another aspect, a computer program is provided in accordance with claim 10.
- In another aspect, a data processing system for generating images of a virtual environment is provided in accordance with claim 11.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 schematically illustrates an entertainment device;
- Figure 2 is a schematic flowchart illustrating a method of generating virtual environment images;
- Figure 3 schematically illustrates example images used as part of the method of Figure 2; and
- Figure 4 schematically illustrates a system for generating virtual environment images.

### DESCRIPTION OF THE EMBODIMENTS

A data processing method and system for generating images of a virtual environment are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

In an example embodiment of the present invention, a suitable system and/or platform for implementing the methods and techniques herein may be an entertainment device.

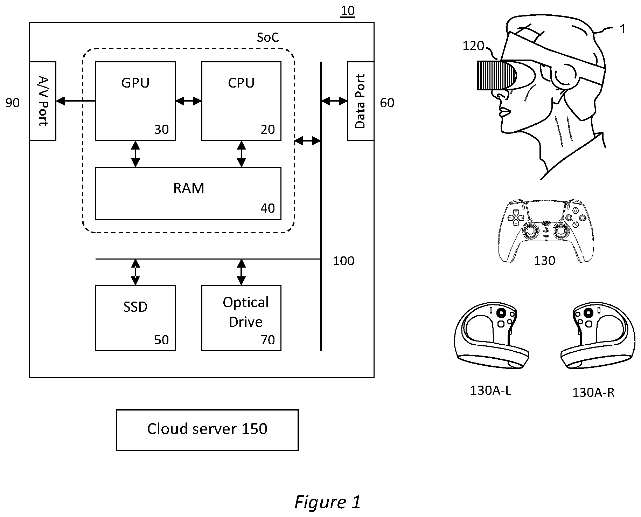

Referring to Figure 1, an example of an entertainment system 10 is a computer or console.

The entertainment system 10 comprises a central processor or CPU 20. The entertainment system also comprises a graphical processing unit or GPU 30, and RAM 40. Two or more of the CPU, GPU, and RAM may be integrated as a system on a chip (SoC).

Further storage may be provided by a disk 50, either as an external or internal hard drive, or as an external solid state drive, or an internal solid state drive.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90 or one or more of the data ports 60.

Where components are not integrated, they may be connected as appropriate either by a dedicated data link or via a bus 100.

An example of a device for displaying images output by the entertainment system is a head mounted display 'HMD' 120, worn by a user 1. It will be appreciated that the content may be displayed using various other devices - e.g. using a conventional television display connected to A/V ports 90.

Interaction with the system is typically provided using one or more handheld controllers 130, and/or one or more VR controllers (130A-L,R) in the case of the HMD. The user typically interacts with the system, and any content displayed by, or virtual environment rendered by the system, by providing inputs via the handheld controllers 130, 130A. For example, when playing a game, the user may navigate around the game virtual environment by providing inputs using the handheld controllers 130, 130A.

In embodiments of the present disclosure, the entertainment device 10 generates one or more images of a virtual environment for display (e.g. via a television or the HMD 120).

The images generated by the entertainment device 10 are each associated with a virtual camera position. In other words, the entertainment device 10 is configured to render an image for display in dependence upon the position of the virtual camera.

It will be appreciated that a virtual camera has an associated viewpoint with respect to the virtual environment such that a portion of the virtual environment is included within the field of view of the virtual camera. This viewpoint is defined by a virtual camera position, which may include the location of the virtual camera in the virtual environment and an orientation of the virtual camera with respect to the virtual environment. In some cases, the virtual camera position may also include a magnification (e.g. zoom) of the virtual camera.

The virtual camera may follow a character in the virtual environment to thereby move with respect to the virtual environment. For example, the virtual camera may follow a non-player character (NPC) in a video game or may be controlled responsive to a user input to follow a player-controlled character. In some examples, the virtual camera may provide a first or third person viewpoint of a given character in a game. Alternatively, the virtual camera may have a fixed location in respect to the virtual environment and may be controlled responsive to an input from a spectator (non-playing user) to update an orientation of the virtual camera. Alternatively, the virtual camera may be controlled responsive to an input from a spectator to allow the spectator to change a position for the virtual camera with respect to the virtual environment without the spectator actively participating in a video game. Hence the position (e.g. a location and/or an orientation) of the virtual camera can be updated and the position of the virtual camera may optionally be controlled in response to a user input.

In some examples, the position of the virtual camera may correspond to tracked movements of the HMD 120 worn by a user so that the viewpoint for the virtual camera is updated according to the user's head movements. A location and/or orientation of an HMD can be tracked using one or more image sensors and/or one or more inertial sensors, such as an accelerometer, gyroscope and/or magnetometer. For example, known inside-out and/or outside-in tracking techniques using image sensors mounted on an HMD and/or mounted to capture images including an HMD can be used to track the location and orientation of the HMD. Therefore, in some cases the viewpoint for the virtual camera can be controlled by a user to move with respect to the virtual environment based on movement of an HMD.

In some cases, the methods and techniques herein may be implemented at least partially on a remote computing device. The remote computing device may be provided by the cloud server and/or service 150. The remote computing device may be accessible to the entertainment device via an internet connection.

Alternatively, the remote computing device may be provided as circuitry accessible to the entertainment device via a wired link or a short-range wireless link. This may reduce lag in communication between the remote computing device and the entertainment device.

It will be appreciated that functionality of the remote computing device may be realised by any suitable number of processors located at any suitable number of devices as appropriate.

Embodiments of the present disclosure relate to generating images of a virtual environment by using a first 'rendering' stage where an image of the environment is rendered, and a second 'uplifting' stage where one or more overlay images of the environment, that have different visual characteristics to the rendered image, are obtained for overlaying over at least part of the rendered image of the virtual environment and an image is generated for display comprising the rendered image and the one or more overlay images. The rendered image is thus subject to a post-processing 'uplifting' stage where at least part of the rendered image is overlaid with overlay images, e.g., with an overlay image of the environment that has a higher resolution or a different style. This overlaying approach provides an efficient way to modify the appearance of the virtual environment in the output image that does not require changes to be made at the rendering stage (e.g. the use of different textures). Accordingly, for example, a traditional remastering process can be avoided, and the computational and memory cost for modifying the appearance of the output image can be reduced as a large set of textures need not be stored and applied as required in other approaches.

The present disclosure is particularly applicable to generating real-time images for video games because, by reducing the associated computational cost, the present disclosure allows modifying the appearance of a game's virtual environment in real-time by devices with lower processing or memory capabilities. For example, the present disclosure can allow an older and computationally weaker entertainment device to output game images that appear to the user as if they were rendered by a new and computationally more powerful entertainment device by overlaying overlay images over parts of the image rendered by the older entertainment device. This can also be achieved without requiring changes to the games engine rendering the initial image.

Such an arrangement may be considered advantageous with respect to a cloud-based arrangement, such as a cloud gaming system, in that the amount of data that is transmitted to/from the server can be reduced. For instance, rather than transmitting images/videos which represent the entire display transmissions can be limited to portions of an image which may be able to be re-used for multiple display frames.

It will be appreciated that the term "overlaying" as used herein relates to arranging a first element over a second element so as to cover at least part of the second element. For example, a first image may be overlaid over a second image, so as to cover a part of the second image arranged below the first image. In some cases, however, it may be suitable for the second element to be removed from the original image with the first element being used in place of the second element; in other words, a substitution may be performed rather than an overlay.

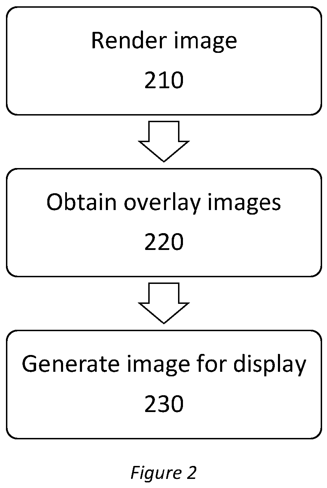

Figure 2 shows an example of a data processing method for generating images of a virtual environment in accordance with one or more embodiments of the present disclosure.

A step 210 comprises rendering an image of a virtual environment. The image may be rendered using any appropriate techniques for rendering images. It will be appreciated that the image rendered at step 210 is associated with a virtual camera position, as described herein.

Step 210 may be performed locally by a user rendering device, such as the entertainment device 10. The image rendered at step 210 may correspond to a natively rendered image, rendered using the normal processing steps performed by the user device. In a typical prior arrangement, the image generated at step 210 is directly output for display.

In contrast, the present disclosure provides techniques for efficiently modifying the appearance of the image rendered at step 210 before it is output for display. Such modifications may, for example, be desirable to increase the resolution of at least a portion of the rendered image or modify the style of the image, so as to make the image appear more recent. For instance, the user device may only be able to render an image at a lower resolution (e.g. 1280 x 720 pixels per frame), and the techniques of the present disclosure may be applied to increase the resolution of at least parts of the image to a higher resolution (e.g. 1920 x 1080 pixels per frame).

A step 220 comprises obtaining one or more overlay images of at least part of the virtual environment. The overlay images may then be overlaid over at least part of the rendered image of the virtual environment. As the at least part of the rendered image of the virtual environment and the one or more overlay images have one or more different visual characteristics (in that they represent the same object or image element in a modified manner), overlaying the overlay images over the rendered images allows modifying one or more visual characteristics of the at least part of the virtual environment while preserving context (e.g. the spatial/geometry structure) of the at least part of the virtual environment.

It will be appreciated that obtaining the overlay images allows modifying the appearance of the rendered image of the virtual environment (e.g. to increase resolution or colour depth of an object in the environment, such as a car) without changing its underlying context (e.g. without changing the shape or functionality of the object). In other words, overlaying the overlay images over the rendered image may provide an alternative representation of the rendered image while preserving the context of the rendered image (e.g. the arrangement of objects in the image).

The one or more visual characteristics that may differ between the at least part of the rendered image and the overlay images may comprise one or more of: resolution, texture, colouring, lighting, or contrast. For example, an original rendered image may depict a tree, and the overlay image may depict the same tree but at a higher resolution, with different textures (e.g. with bark of the tree being represented by a different texture), different colouring (e.g. with different colour depth, or using a different colour style such as a pastel colour style), in different lighting (e.g. brighter or darker lighting, or with more accurate lighting obtained using more complex lighting algorithms), and/or with different contrast settings.

In some cases, the visual characteristics of the image that differ (i.e. are modified) between the rendered and overlay images may be set in dependence on a user input. The user input may define specific visual characteristics that are to be modified (e.g. the user may select a specific resolution or colour depth setting for the overlay images). Alternatively, or in addition, the user input may specify a more general type of modification to the visual characteristics. For example, the user may select a style that they wish the overlay image to be displayed in, e.g. by selecting among a plurality of reference style images of different styles.

It will be appreciated that the overlay images may comprise a plurality of separate overlay images, e.g. each depicting a different part of (e.g. object in) the virtual environment in the rendered image. For example, for a rendered image of a city, separate overlay images of a car and of a building may be obtained for overlay over corresponding parts of the rendered image.

It will also be appreciated that overlay images may be obtained for overlaying over part or all of the image rendered at step 210. Of course the 'part' of the image rendered at step 210 may comprise a plurality of disjoint portions of the image.

In one or more examples, obtaining the overlay images may comprise requesting, e.g. by a device that rendered the image at step 210, the overlay images from a remote computing device, such as the cloud server 150, which generates the overlay images. This allows further reducing the computational load on the rendering device (e.g. entertainment device 10) by outsourcing the generation of the overlay images to the remote computing device.

The request for overlay images comprises data that allows the remote computing device to generate or otherwise obtain the overlay images. The request may comprise data relating to the part of the environment for which overlay images are requested, such as identifiers of objects in the environment for which overlay images are requested. Alternatively, or in addition, the request may comprise orientation data relating to the orientation of the rendered image, such as the virtual camera position in the rendered image.

Alternatively, or in addition, the request may comprise the at least part of the rendered image that is to be overlaid over by the overlay images. This allows the remote computing device to perform transformations on the rendered image and to return the transformed image for overlaying over the rendered image.

In some cases, the request may comprise data relating to the desired visual characteristics of the overlay images. For example, the request may comprise a style (e.g. as defined by a text prompt or reference style image) to be transferred for the overlay images. Alternatively, these visual characteristics may be predefined at the remote computing device side. Alternatively, obtaining the overlay images may comprise generating the overlay images locally by the user rendering device (e.g. entertainment device 10). It will be appreciated that in this case, at least part of the processing required to generate the overlay images may also be performed by the remote computing device to reduce computational load on the user device.

The overlay images may thus be generated by the user device and/or the remote computing device as appropriate.

Generating overlay images may comprise retrieving one or more pre-generated overlay images, which may, for example, be pre-generated for a plurality of possible rendered images such that overlay images can be retrieved for different current rendered images in real-time. The pre-generated overlay images may be of a higher visual quality (e.g. higher resolution or colour depth) than the rendered image. As the overlay images are pre-generated, these images may be generated using techniques that would normally be excessively computationally demanding to perform in real-time - for example, the pre-generated overlay images may be rendered at high (e.g. 4K - 3840 x 2160 pixels per frame) resolutions. Further, as described in further detail below, using pre-generated images allows reducing latency as fetching of the pre-generated image at step 220 may be initiated before rendering of the image at step 210 is complete.

Alternatively, or in addition, generating overlay images may comprise generating overlay images in real-time by modifying the current rendered image. It will be appreciated that some overlay images obtained at step 220 may be pre-generated (e.g. if their generation is computationally more expensive) and some may be generated in real-time (e.g. if their generation is computationally cheaper).

Generating overlay images, either in advance or in real-time, may comprise transforming at least part of the rendered image of the virtual environment. Transforming of the rendered image may comprise one or more of: colour adjustment (e.g. modifying the colour balance, brightness, saturation, or contrast), filtering (e.g. to emphasize or suppress given image features such as edges), warping, histogram equalization, style transfer, or upscaling. The transformation applied to the image may be predefined or selected by a user.

A style transfer transformation of the at least part of the rendered image may be performed using an appropriate previously trained machine learning model, such as a neural style transfer (NST) model. The style transfer may comprise transferring a style from a reference style image to the at least part of the rendered image. Alternatively, or in addition, the style transfer may comprise transforming the style of the at least part of the rendered image based on a text prompt.

Transforming the rendered image (or part thereof) using style transfer techniques provides a flexible way to modify appearance of the rendered image without requiring the specific modifications to be pre-defined by a developer. Style transfer techniques allow a wide range of modifications to be made to the image in dependence on different selected styles to be applied to the image (e.g. on different reference style images).

The style to be applied to the image may be predefined and/or based on user input. For example, an operator (e.g. game developer) may predefine one or more reference styles (e.g. reference style images or reference style text prompts) whose style is transferred to the rendered image. By defining an appropriate reference style, the appearance of a remaster to at least part of the rendered image may be achieved without requiring the actual, and typically complex, remaster process to be performed.

In some cases, style transfer techniques can allow efficiently re-using a remastered version of content across multiple different types of devices. For example, images from content (e.g. a videogame) remastered for a first type of device (e.g. personal computer) may be used as reference style images for style transfer of images rendered by a second type of device (e.g. a gaming console) thus providing the appearance of a remaster having been performed for the second type of device. It will be appreciated that a separate remaster is typically required for different types of devices as each type of device may use a different underlying process for rendering the content. The present approach in turn can allow re-using a remastering process performed for one type of device for further types of devices.

Alternatively, or in addition, to predefined styles, the style transferred to the image may be determined based on user input. For example, the user may be provided with a set of predefined styles (e.g. a set of reference style images) and the user may select one or more of the styles to apply to the image. Using a predefined set of styles allows the overlay images to be pre-generated and thus can reduce processing times for obtaining the overlay images. The user may select a given style by selecting a corresponding reference style image. Alternatively, or in addition, the user may select a given style by providing a prompt (e.g. a text or audio description of the desired style) and a predefined style that is a closest match may be automatically selected. For example, the closest match style may be identified based on tags pre-assigned to each predefined style.

In some cases, the user input may define a new style as opposed to being selected from a predefined set of styles. For example, the user may define a new style by inputting (e.g. via an application running the content, or via an application on the user's personal device (e.g. mobile phone)) a text prompt describing the style, and/or a reference style image whose style they wish to be used. This allows providing a more personalised modification to the appearance of the images generated for display. In some cases, the applied style (e.g. the reference style image) may be determined in dependence on one or more objects associated with the part of the rendered image that is transformed. For example, different styles may be transferred to different objects in the environment, such as to a character outfit and to a piece of furniture in the scene. These different styles for different objects may be predefined or based on user input, as described above.

An upscaling transformation of the at least part of the rendered image may comprise upscaling the at least part of the rendered image to increase the resolution of the at least part of the rendered image. Upscaling allows increasing the resolution of desired parts of the rendered image at reduced computational cost as compared to native high resolution rendering. Upscaling may comprise spatial upscaling whereby data from the current frame (i.e. rendered image) is used for upscaling. Alternatively, or in addition, upscaling may comprise temporal upscaling whereby data from the current frame and/or one or more previous frames may be used for upscaling. Various spatial and/or temporal upscaling techniques may be used for the upscaling, such as FidelityFX Super Resolution (FSR), point upscaling, or bilinear upscaling.

In one or more examples, the transformation (e.g. upscaling) of the image is performed by a remote computing device (e.g. the cloud server 150). For instance, a part of the rendered image may be transmitted to the remote computing device which may transform (e.g. upscale) the part of the rendered image and transmit it back for overlaying over that part of the rendered image to generate an image for display. This allows modifying the appearance of at least part of the image output for display to a user without requiring further processing (e.g. the transformation to be performed) by the rendering device, and so without increasing the computational load on the rendering device. The rendering process may thus remain entirely unchanged and the overlay image may act as a screen effect that imitates changes that might otherwise require changes (and typically increases in computational cost) to the rendering process. For example, in this way a game running on an older gaming device may appear as if it were run on a newer gaming device.

Rather than a remote computing device that performs an on-demand upscaling, embodiments of the present disclosure may instead use pre-generated overlay content that represents an upscaled version of the same object or portion of an image. This may be stored locally at a device, for instance being downloaded in advance of execution of an application, or may be obtained on-the-fly during use of the application.

In some cases, generating the overlay images may comprise generating one or more overlay images of the at least part of the virtual environment in dependence on orientation data relating to an orientation of the rendered image of the virtual environment. The orientation data may comprise a virtual camera position associated with the rendered image of the virtual environment. Alternatively, or in addition, the orientation data may comprise a mesh of one or more objects in the at least part of the virtual environment (that the overlay images depict).

Generating the one or more overlay images in dependence on an orientation of the rendered image may comprise retrieving pre-generated overlay images or generating overlay images in real-time.

Regarding retrieving pre-generated overlay images, one or more pre-generated images may be retrieved from storage (e.g. from local storage on the rendering device, or from a remote computing device) in dependence on the orientation data relating to the orientation of the rendered image. For example, a database may store overlay images (for overlaying, or replacing, parts of the rendered image) for a plurality of rendered image orientations (e.g. for a plurality of different virtual camera positions), and an overlay image corresponding to the orientation of the image currently rendered at step 210 may be retrieved.

It will be appreciated that overlay images may not be stored for all possible image orientations. In some cases, an overlay image corresponding to an orientation that is closest to the orientation of the currently rendered image (e.g. with the closest location and/or angle of the virtual camera) may be retrieved. As discussed in further detail below, the retrieved overlay image may then be projected in dependence on the difference between the orientation of the currently rendered image and the orientation associated with the retrieved overlay image, so as to more closely match it with the orientation of the currently rendered image. For example, the retrieved image may be rotated and/or magnified in dependence on the different orientations, in order to align it with the orientation of the currently rendered image.

The pre-generated images may be generated using the various techniques described elsewhere herein. For example, the pre-generated images may comprise images that have been upscaled or subject to style transfer.

Regarding generating overlay images in dependence on an orientation of the rendered image, a model of a modified version of the virtual environment (e.g. that renders images of the environment in a different style to that of the rendering step 210) may be used to generate overlay images for an input image orientation. For example, based on an input virtual camera position, the model may output an overlay image of the virtual environment from the input virtual camera position for overlaying over the image rendered at step 210. The overlay images may be generated in this way by the remote computing device. For example, the model of the modified version of the virtual environment may run on the remote computing device (e.g. cloud server 150) to save processing resources on the rendering device (e.g. entertainment device 10). Rather than running a full version of the modified virtual environment, it is possible that reduced versions are utilised - for instance, rendering only characters and not backgrounds. This may represent a more efficient manner of generating the overlay content than rendering the full environment in the case that only specific elements are to be overlaid.

In some cases, generating the overlay images may comprise projecting at least one overlay image in dependence on data relating to an orientation of the rendered image of the virtual environment (e.g. a virtual camera position associated with the rendered image of the virtual environment). Projecting the overlay image may, for example, comprise one or more of rotating, panning, and/or magnifying of the image. For example, pre-generated overlay images (e.g. images of a given objected having style transfer applied to them) may be stored for a subset of image orientations and a retrieved overlay image corresponding to a given image orientation (e.g. given virtual camera position) may be projected so as to match more closely the orientation (e.g. virtual camera position) of the image rendered at step 210.

For instance, the retrieved overlay image may be projected in dependence on virtual camera positions of the rendered image and of retrieved image, so that the retrieved image appears as if it was taken from the virtual camera position of the rendered image. For example, a retrieved image of an object (e.g. chair) in the virtual environment may be panned and/or rotated in dependence on the difference between the virtual camera angle of the retrieved image and the virtual camera angle of the rendered image. Alternatively, or in addition, the retrieved object image may be magnified in dependence on the difference between the locations of the virtual cameras in the retrieved and rendered images and the relative distances between the virtual cameras and the object in the virtual environment.

Alternatively, or in addition, the retrieved overlay image may be projected in dependence on a mesh of one or more objects in the at least part of the virtual environment. For example, a retrieved overlay image of a wardrobe may be projected so as to align its orientation with the mesh of the wardrobe in the virtual environment. For example, based on a mesh of an object (e.g. chair), an orientation of a predefined part of the object (for example, of a predefined face (or part thereof) of the object, e.g. as defined by a normal of the face or of a specific point on the face) may be determined. The orientation of the retrieved image may be determined in a similar manner - e.g. in dependence on an orientation of a normal line from a face of the object. The retrieved image may then be projected so the orientation of the object in that image matches that of the object in the rendered image.

The projection of the overlay image may be performed by the remote computing device to reduce computational load on the rendering device. For example, the remote computing device may project the overlay image as part of generating the overlay image upon a request received from the rendering device. Alternatively, the overlay image may be generated (e.g. retrieved based on virtual camera positions) by the rendering device, and transmitted to the remote computing device to perform the projection. In some cases, instead of deriving the orientation of the image (and/or objects therein) based on a virtual camera position or mesh, 'image orientation' identifiers may be pre-assigned to a plurality of possible image orientation. In such cases, for example, the orientation data may comprise an identifier of the orientation of the rendered image. This identifier may be transmitted as part of the request for overlay images to the remote computing device, which may generate overlay images with an orientation matching the received identifier of the rendered image's orientation.

Step 220 may further comprise selecting a part of the virtual environment for which overlay images are obtained. The selection may be made such that the part of the virtual environment is one that the user is likely to pay more attention to, and so the overall experience of the user would be most enhanced by changing (e.g. improving) the visual appearance of that part. The part of the environment may be selected based on various factors. For example, the part of the virtual environment may be selected in dependence on one or more of: a gaze direction of a user, one or more objects associated with the part of the virtual environment, an application associated with the image generated for display, a user input, or a frame rate for generating images for display.

Considering user gaze, modified (e.g. upscaled to a higher resolution) images may, for example, be obtained for parts of the image the user's gaze is directed at (e.g. as determined using a gaze tracker in the HMD 120). For example, parts of the image within a predetermined distance (e.g. in pixels) from the current user gaze location on the image may be selected). This can allow maximising the visual effect of overlaying of the overlay images over the rendered image by modifying the appearance of parts of the image that the user is currently looking at (e.g. the appearance of virtual environment objects shown in the parts of the image the user is currently looking at).

In some cases, once a part of the rendered image is selected (e.g. based on user gaze) for obtaining overlay images for a first frame, overlay images may be obtained for that part of the rendered image (e.g. the virtual environment objects in the part of the rendered image) in subsequent frames independent of user gaze to provide a consistent visual experience to the user.

Considering objects associated with the environment part, overlay images may, for example, be obtained for parts of the rendered image corresponding to one or more selected objects in the virtual environment. For instance, a given building in the virtual environment may be selected, and each time this building is shown in the rendered image, an overlay image for the building may be obtained to consistently modify the visual appearance of the building across frames of the content.

The one or more objects may be selected by an operator (e.g. a game developer), and/or may be selected automatically. The objects may be automatically selected prior to rendering of the content; or in real-time, e.g. during or after an image of the content has been rendered at step 210.

For example, the objects may be selected based on historical data relating to interaction of a plurality of users with the content. For instance, the objects may be selected as the objects that users have historically most interacted with (e.g. interacted with most frequently, for longest periods of time, and/or have approached (i.e. have been within a predetermined distance of) most frequently), or objects that users have historically most frequently gazed at (e.g. as determined using HMDs associated with the historical users). This selection may be made prior, during, or after rendering of the image at step 210 - however, making the selection prior to rendering allows reducing the processing time for obtaining the overlay images.

In some cases, a prediction of interactions with the content of the particular user for whom the image is generated at step 230 may be made based on the historical data relating to users' interactions using a trained predictive model. Objects may then be selected for the particular user based on the predicted interaction - for example, objects for which the probability of user interaction with a given object is above predetermined threshold may be selected.

Alternatively, or in addition, the objects may be selected based on one or more properties of objects in the virtual environment. Example relevant properties of an object may include the level of detail (LOD), a location in the virtual environment, and a distance (in the virtual environment) from the virtual camera, and/or interactivity of the object (i.e. whether the user is able to interact with the object in the virtual environment). For example, objects that have a LOD above a predetermined threshold, that are within a predetermined threshold distance of the virtual camera, and/or that are interactive may be selected as a change to visual characteristics of such objects may be more noticeable to the user. This selection may be made prior, during, or after rendering of the image at step 210 - making the selection prior to rendering allows reducing the processing time for obtaining the overlay images.

Alternatively, or in addition, the objects may be selected after rendering of the image based on image analysis of the rendered image. For example, appropriate image analysis techniques may be applied to identify objects whose properties meet one or more predetermined conditions and overlay images may be obtained for those objects. For instance, image analysis may be used to identify objects with a LOD above a predetermined threshold so that overlay images can be obtained for those objects. Considering the application associated with the displayed content, overlay images for different parts of the rendered image may, for example, be obtained for different applications (e.g. different video games) - for instance, a given application may have associated predefined objects in the virtual environment for which overlay images are to be obtained, as described herein.

Considering user input, a user may, for example, select which parts of the environment should be modified in visual appearance, e.g. during an initial configuration, or application load, step. For example, the user may select one or more objects in the virtual environment the visual appearance of which they wish to be modified. When a selected object is then shown in a rendered image, an overlay image of that object may be obtained. In some cases, the user may select a set of objects for which overlay images are obtained. The set of objects may, for example, be defined by object classifications (e.g. chairs, buildings, or troops of a given player). The user may select the objects, or sets of objects, in a variety of ways, such as using a dropdown menu, a search box, or by selecting (e.g. clicking) objects displayed in a configuration image.

Alternatively, or in addition, one or more predefined configurations of which parts of the environment are modified in visual appearance may be determined (e.g. predefined selections of objects to obtain overlay images for may be made), and the user may select one of the predefined configurations. For example, a preview of one or more images for display generated based on each predefined configuration may be presented to the user, and the user may select one of the previews and the associated configuration. The selected configuration may then define the parts of the environment that are modified in visual appearance for subsequent rendered images.

User selections may be stored so that they can be re-used between instances of the content and/or between users.

Considering frame rate, the selection of parts of the image, e.g. of objects in the environment, for which overlay images are obtained may be dependent on the frame rate for generating images for display (i.e. the frame rate of the content). For example, this selection may be reduced (e.g. one or more objects removed from the selection) for higher frame rates to help avoid lag resulting from obtaining overlay images, and/or increased (e.g. one or more objects added to the selection) for lower frame rates to allow further modifications to the visual appearance of the image to be made. The objects in the environment that are added/removed from the selection may be determined based on properties of the objects, such as their size (e.g. in pixels) or LOD. For example, for a default selection of objects for a frame rate of 30 frames per second (fps), objects that are larger and/or have higher LOD may be removed from the selection when the frame rate is at 60 fps, and objects that are smaller and/or have a lower LOD may be removed from the selection when the frame rate is at 45 fps.

In some cases, a priority ranking may be assigned to a plurality of objects in the virtual environment, where the priority ranking defines the relative importance of the objects to the visual experience of the user. This priority ranking may, for example, be empirically determined based on historical data relating to users' interactions with the content. Alternatively, or in addition, the priority ranking may be determined based on user input (e.g. the user may specify the visual appearance of which objects is most important to them), or user gaze (e.g. based on which objects the user, and/or other users, most gaze at). Objects may then be added/removed from the selection based on the priority ranking. For example, for higher frame rates, objects may be removed from the selection starting with objects with the lowest priority ranking; or for lower frame rates, objects may be added to the selection starting with objects with the highest priority ranking.

In some cases, in a similar manner, the part of the virtual environment for which overlay images are obtained may be further selected based on the available computing (e.g. processing, memory, or communication) resources of the rendering device (e.g. entertainment device 10) and/or of the remote computing device (e.g. cloud server 150). For example, when the available processing resources or communication bandwidth decrease, overlay images may be obtained for fewer parts of the environment or for parts of the environment with a lower LOD. In some cases, the step 220 of obtaining modification data may be performed at least partly in parallel to the step 210 of rendering the image of the virtual environment. This can increase the efficiency of generating the images for display.

Rendering of the image at step 210 may comprise determining data relating to an orientation of the image to be rendered (also referred to herein as 'orientation data') and rendering the image in dependence on the orientation data. For example, rendering of the image may comprise first determining orientation data such as a virtual camera position associated with the image or a mesh of objects in the virtual environment depicted in the image, and then performing one or more shading operations to render the image for the given orientation data such as for the given virtual camera position or object's mesh. The latter rendering (e.g. shading) operations are typically more computationally intensive and time consuming than the initial determination of the orientation data.

In cases where the overlay images are generated in dependence on orientation data relating to an orientation of the rendered image of the virtual environment (e.g. a virtual camera position of the rendered image), the generation of overlay images in dependence on the orientation data may be initiated as soon as the orientation data is determined as part of the rendering process while the remainder of the rendering process is ongoing (e.g. while one or more shading operations are being performed to render the image). For example, in cases where the overlay images are obtained by retrieving pre-generated images in dependence on a virtual camera position, the process of retrieving a pre-generated image based on the virtual camera position may be initiated as soon as the virtual camera position is determined and before the rendering of the image at step 210 is completed (or in some cases before it starts). In this way, step 220 may be performed while the more computationally intensive rendering part of the step 210 is ongoing.

Parallelising steps 210 and 220 also allows increasing efficiency when overlay images are requested from the remote computing device at step 220 as the local rendering device can render the image in parallel to the remote computing device generating the overlay images for overlaying over the rendered image, and the computational resources of both devices can be used simultaneously.

In some cases, expected required overlay images may be predicted to allow obtaining the overlay images in advance and increase the processing speed. For example, the expected required overlay images may be requested ahead of time from the remote computing device so that they can be overlaid over the rendered image directly after rendering of the image is completed. The expected required overlay images may be predicted in dependence on a predicted virtual camera position of one or more future frames. The virtual camera position may for example be predicted based on predicted actions of the user (e.g. predicted interactions or motion of the user in the virtual environment). The predicted actions of the user may be determined using a machine learning model previously trained on historical data relating to user actions in the environment. For example, based on a predicted virtual camera position for a future frame corresponding to a given object being captured by the virtual camera, an overlay image of the given object may be obtained ahead of time. In some cases, an overlay image obtained ahead of time may be projected prior to overlaying over the rendered image to account for changes between the actual and predicted virtual camera positons.

A step 230 comprises generating an image for display comprising the rendered image and the one or more overlay images.

Generating the image for display may comprise overlaying the overlay images over the at least part of the rendered image of the virtual environment to cover the at least part of the rendered image of the virtual environment. Overlaying the overlay images over the rendered image allows modifying visual characteristics of at least part of the output image, and outputting an image that is more visually appealing to the user, without requiring significant computational or memory resource usage. The present approach thus allows improving the balance between the visual quality of the output image and the computational resources needed to obtain that output image, and provides an efficient way to modify the appearance of the rendered image to the end-user without requiring changes to the rendering process (e.g. rendering step 210).

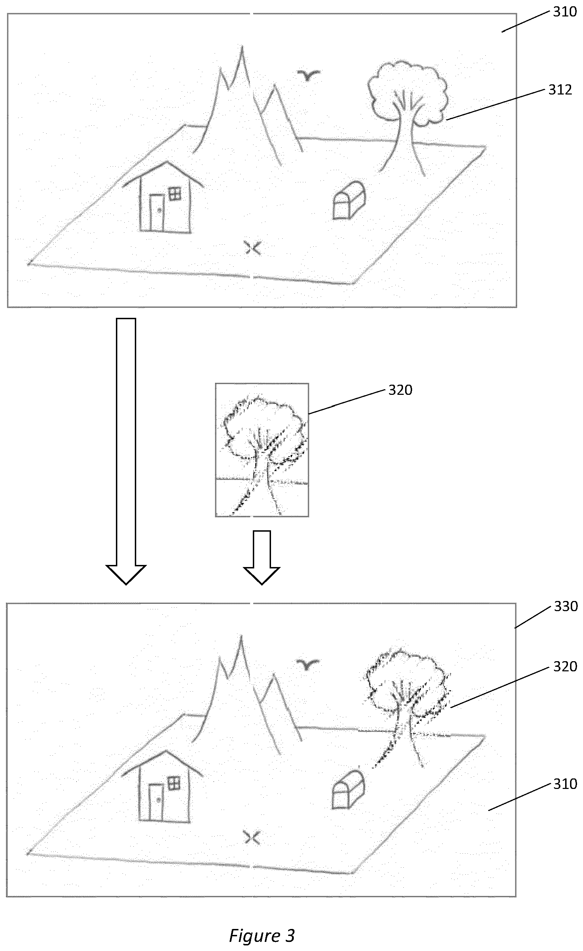

Step 230 may be further illustrated with reference to Figure 3 which schematically illustrates example images that may be used in the method of Figure 2. These example images comprise an example image 310 of a virtual environment rendered at step 210, an example overlay image 320 obtained at step 220, and an example image for display 330 generated at step 230 of the method of Figure 2.

As shown in Figure 3, the image 310 rendered at step 210 may comprise (i.e. depict) various objects in the virtual environment, such as a house, mountains, bird, and a tree 312.

The overlay images obtained at step 220 may comprise an overlay image 320 of part of the virtual environment, such as an overlay image of the tree 312. For example, the overlay image 320 may comprise a transformed version of the corresponding part of the rendered image 310 that has been transformed to a pre-defined style using style transfer techniques as described herein.

Generating the image for display 330 at step 230 may comprise overlaying the overlay image 320 over the corresponding part of the rendered image 310 to cover this part of the rendered image, thus modifying the visual characteristics of this part of the rendered image. For example, in the generated image 330, the overlay image 320 is overlaid over the tree 312 in the virtual environment to give the visual appearance of the tree 312 being rendered at higher contrast and resolution.

In some cases, the overlay images obtained at step 220 may comprise an overlay image of the virtual environment for replacing the image rendered at step 210. For example, the overlay image may comprise a modified version of the entire rendered image with at least part of the rendered image being transformed (e.g. upscaled). Generating the image for display at step 230 may then comprise outputting the overlay image, thus in effect substituting the overlay image for the initially rendered image.

The replacement overlay image for display may be requested from a remote computing device, e.g. based on an input rendered image for transformation at the remote computing device, or based on a virtual camera position of the rendered image to be used at the remote computing device to generate an overlay image. In this way, the generation of the image for display may be outsourced to the remote computing device, thus reducing the computational load on the local rendering device.

It will be appreciated that the techniques of the present disclosure may be applied to the generation of a plurality of images (i.e. frames) for display to a user. For example, the present techniques may be applied to modify the visual appearance of frames of a video game 'on-the-fly' as the game is being played by a user.

In some cases, one or more overlay images may be obtained for each frame and used to generate the corresponding image for display.

Alternatively, at least part of one or more overlay images may be re-used between frames in dependence on the relative orientations of the objects being shown in the frames. For example, an overlay image of an object shown in a plurality of frames may be re-used between frames if the difference in relative orientations of viewpoints represented by the frames (e.g. as defined by the virtual camera position in the frames) is less than a predetermined threshold. In some cases, an overlay image obtained for a first frame may be used directly for the second frame, e.g. when the difference in relative orientations between the first frame and the second frame is less than a first, lower, predetermined threshold.

Alternatively, or in addition, an overlay image obtained for the first frame may first be projected before being used for the second frame, e.g. when the difference in relative orientations between the first frame and the second frame is less than a second, higher, predetermined threshold. The projection may be performed using the projection techniques described herein - e.g. the overlay image may be magnified, panned or rotated to align its orientation closer to that of the second frame. For example, an overlay image obtained for a first frame associated with first virtual camera position may be panned in dependence on a second virtual camera position associated with a second frame so that the overlay image can be re-used for the second frame.

It will be appreciated that the overlay images may be re-used between any two or more different frames and not just consecutive frames. In some cases, overlay images obtained for a given frame may be cached in storage for a predetermined period of time (e.g. predetermined number of frames) to allow their re-use in that time, after which they may be removed from storage to reduce memory usage.

Re-using overlay images between frames in this way allows reducing the amount of processing required to generate content for display. In examples where overlay images are obtained from a remote computing device, this also allows reducing the amount of data communicated between devices and saving communication bandwidth.

It will be appreciated that the orientations of the at least part of the rendered image and of the corresponding overlay image may not have to be an exact match for the overlay image to be overlaid over the rendered image. For example, the overlay image may be overlaid over the rendered image in dependence on their respective orientations differing by less than a predetermined threshold. The difference in relative orientations may for example be defined by the virtual camera positions of the respective images - for instance, the overlay image may be overlaid over the rendered image if their respective virtual camera angles differ by less than a predetermined angle (e.g. 5 degrees) and their respective virtual camera locations differ by less than a predetermined threshold (e.g. the distances between their respective virtual camera locations and an object shown in the images differ by less than 10%). This tolerance for differences in orientation may be predefined or set by the user. It will also be appreciated that this tolerance may be applicable to generation of overlay images (e.g. to determine whether a projection of a retrieved image is required) and/or to re-use of overlay images between frames (e.g. to determine whether an overlay image can be re-used for a subsequent frame).

In one or more examples, the present techniques are implemented at least partly by a remote computing device (e.g. the cloud server 150). For example, step 210 of rendering an image of the virtual environment may be performed by a local rendering device (i.e. data processing apparatus), such as the entertainment device 10. Step 220 may then comprise requesting the one or more overlay images from the remote computing device which may generate the overlay images using the techniques described herein. Generating the overlay images using the remote computing device allows reducing the computational load on the rendering device. The remote computing device may subsequently transmit the overlay images to the rendering device for generating the image for display at step 230. Alternatively, the remote computing device may itself generate the image for display at step 230 and transmit the generated image to the rendering device for display by the rendering device.

Referring back to Figure 2, in a summary embodiment of the present invention a data processing method for generating images of a virtual environment comprises the following steps.

A step 210 comprises rendering an image of a virtual environment, as described elsewhere herein.

A step 220 comprises obtaining one or more overlay images of at least part of the virtual environment, the overlay images being for overlaying over at least part of the rendered image of the virtual environment, and the at least part of the rendered image of the virtual environment and the one or more overlay images having one or more different visual characteristics, as described elsewhere herein.

A step 230 comprises generating an image for display comprising the rendered image and the one or more overlay images, as described elsewhere herein.

It will be apparent to a person skilled in the art that variations in the above method corresponding to operation of the various embodiments of the method and/or apparatus as described and claimed herein are considered within the scope of the present disclosure, including but not limited to that:
- generating 230 the image for display comprises overlaying the one or more overlay images over the at least part of the rendered image of the virtual environment to cover the at least part of the rendered image of the virtual environment, as described elsewhere herein;
- context of the at least part of the virtual environment in the rendered image is preserved in the one or more overlay images, as described elsewhere herein;
- the method further comprises selecting one or more objects in the virtual environment in dependence on one or more selected from the list consisting of: one or more properties of the objects, a gaze direction of a user, an application associated with the image generated for display, a frame rate for generating images for display, or a user input; wherein obtaining 220 the one or more overlay images comprises obtaining one or more overlay images of the selected one or more objects, as described elsewhere herein;
- the one or more visual characteristics comprise one or more selected from the list consisting of: resolution, texture, colouring, lighting, or contrast, as described elsewhere herein;
- obtaining 220 the overlay images comprises requesting the overlay images from a remote computing device, as described elsewhere herein;
- obtaining 220 the overlay images comprises generating the overlay images, as described elsewhere herein;
   - in this case, optionally, the overlay images may be generated by a remote computing device, as described elsewhere herein;
   - in this case, optionally generating the overlay images comprises transforming the at least part of the rendered image of the virtual environment; where transforming the at least part of the rendered image of the virtual environment comprises: transferring a style to the at least part of the rendered image of the virtual environment, and/or upscaling the at least part of the rendered image of the virtual environment, as described elsewhere herein;
   - in this case, optionally generating the overlay images comprises generating one or more overlay images of the at least part of the virtual environment in dependence on orientation data relating to an orientation of the rendered image of the virtual environment, as described elsewhere herein;
      ▪ where, optionally rendering 210 the image of the virtual environment comprises determining the orientation data and rendering the image in dependence on the orientation data; and the step of generating the overlay images in dependence on the orientation data is initiated upon determining the orientation data, while the image is being rendered, as described elsewhere herein;
      ▪ where, optionally the orientation data comprises one or more selected from the list consisting of: a virtual camera position associated with the rendered image of the virtual environment, a mesh of one or more objects in the at least part of the virtual environment, or an image orientation identifier, as described elsewhere herein;
      ▪ where, optionally determining the one or more overlay images of the at least part of the virtual environment comprises projecting at least one overlay image in dependence on the orientation data, as described elsewhere herein;
- the virtual environment is a virtual environment of a videogame, and wherein the image is generated for display to a user playing the videogame, as described elsewhere herein;
- the step of obtaining overlay images is performed at least partly in parallel to the step of rendering the image of the virtual environment, as described elsewhere herein;
- the at least part of the virtual environment has one or more different visual characteristics in the one or more overlay images than in the rendered image, as described elsewhere herein; and
- the method is for remastering images of a virtual environment, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

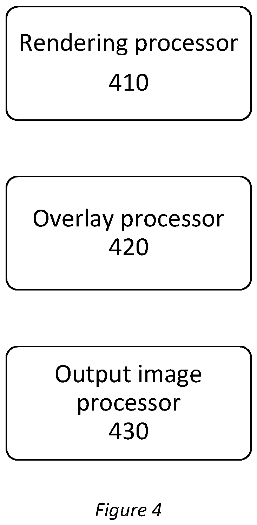

Referring to Figure 4, in a summary embodiment of the present invention, a data processing system for generating images of a virtual environment may comprise the following:
A rendering processor 410 configured (for example by suitable software instruction) to render an image of a virtual environment, as described elsewhere herein.

An overlay processor 420 configured (for example by suitable software instruction) to obtain one or more overlay images of at least part of the virtual environment, the overlay images being for overlaying over at least part of the rendered image of the virtual environment, and the at least part of the rendered image of the virtual environment and the one or more overlay images having one or more different visual characteristics, as described elsewhere herein.

An output image processor 430 configured (for example by suitable software instruction) to generate an image for display comprising the rendered image and the one or more overlay images, as described elsewhere herein.

These processors 410-430 may, for example, be implemented by the CPU 20 of the entertainment system 10. Of course, it will be appreciated that the functionality of these processors may be realised by any suitable number of processors located at any suitable number of devices and any suitable number of devices as appropriate rather than requiring a one-to-one mapping between the functionality and a device or processor.

The foregoing discussion discloses and describes merely exemplary embodiments of the present invention. The invention is defined by the independent claims, with various optional features being set out in the dependent claims.

## Claims

1. A data processing method for generating images of a virtual environment, the method comprising:
rendering (210) an image of a virtual environment, wherein rendering the image of the virtual environment comprises: determining orientation data relating to an orientation of the rendered image of the virtual environment, and rendering the image in dependence on the orientation data;
generating (220) one or more overlay images of at least part of the virtual environment, the overlay images being for overlaying over at least part of the rendered image of the virtual environment, and the at least part of the rendered image of the virtual environment and the one or more overlay images having one or more different visual characteristics;
wherein generating the overlay images comprises generating one or more overlay images of the at least part of the virtual environment in dependence on the orientation data; and
wherein the step of generating the overlay images in dependence on the orientation data is initiated upon determining the orientation data, while the image is being rendered; and
generating (230) an image for display comprising the rendered image and the one or more overlay images.

2. The method of claim 1, wherein generating the image for display comprises overlaying the one or more overlay images over the at least part of the rendered image of the virtual environment to cover the at least part of the rendered image of the virtual environment.

3. The method of claim 1 or 2, wherein context of the at least part of the virtual environment in the rendered image is preserved in the one or more overlay images.

4. The method of any preceding claim, further comprising selecting one or more objects in the virtual environment in dependence on one or more selected from the list consisting of: one or more properties of the objects, a gaze direction of a user, an application associated with the image generated for display, a frame rate for generating images for display, or a user input; wherein obtaining the one or more overlay images comprises obtaining one or more overlay images of the selected one or more objects.

5. The method of any preceding claim, wherein the one or more visual characteristics comprise one or more selected from the list consisting of: resolution, texture, colouring, lighting, or contrast.

6. The method of any preceding claim, wherein generating the overlay images comprises transforming the at least part of the rendered image of the virtual environment; wherein transforming the at least part of the rendered image of the virtual environment comprises: transferring a style to the at least part of the rendered image of the virtual environment, and/or upscaling the at least part of the rendered image of the virtual environment.

7. The method of any preceding claim, wherein the orientation data comprises one or more selected from the list consisting of: a virtual camera position associated with the rendered image of the virtual environment, a mesh of one or more objects in the at least part of the virtual environment, or an image orientation identifier.

8. The method of any preceding claim, wherein determining the one or more overlay images of the at least part of the virtual environment comprises projecting at least one overlay image in dependence on the orientation data.

9. The method of any preceding claim, wherein the virtual environment is a virtual environment of a videogame, and wherein the image is generated for display to a user playing the videogame.

10. A computer program comprising computer executable instructions adapted to cause a computer system to perform the method of any preceding claim.

11. A data processing system for generating images of a virtual environment, the system comprising:
a rendering processor (410) configured to render an image of a virtual environment, wherein rendering the image of the virtual environment comprises: determining orientation data relating to an orientation of the rendered image of the virtual environment, and rendering the image in dependence on the orientation data;
an overlay processor (420) configured to generate one or more overlay images of at least part of the virtual environment, the overlay images being for overlaying over at least part of the rendered image of the virtual environment, and the at least part of the rendered image of the virtual environment and the one or more overlay images having one or more different visual characteristics
wherein generating the overlay images comprises generating one or more overlay images of the at least part of the virtual environment in dependence on the orientation data; and
wherein generating the overlay images in dependence on the orientation data is initiated upon determining the orientation data, while the image is being rendered; and
an output image processor (430) configured to generate an image for display comprising the rendered image and the one or more overlay images.

## Patentansprüche

1. Datenverarbeitungsverfahren zum Erzeugen von Bildern einer virtuellen Umgebung, wobei das Verfahren umfasst:
Rendern (210) eines Bildes einer virtuellen Umgebung, wobei das Rendern des Bildes der virtuellen Umgebung umfasst: Bestimmen von Ausrichtungsdaten, die sich auf eine Ausrichtung des gerenderten Bildes der virtuellen Umgebung beziehen, und Rendern des Bildes in Abhängigkeit von den Ausrichtungsdaten;
Erzeugen (220) eines oder mehrerer Überlagerungsbilder von mindestens einem Teil der virtuellen Umgebung, wobei die Überlagerungsbilder zum Überlagern über mindestens einen Teil des gerenderten Bildes der virtuellen Umgebung vorgesehen sind und der mindestens eine Teil des gerenderten Bildes der virtuellen Umgebung und das eine oder die mehreren Überlagerungsbilder eine oder mehrere unterschiedliche visuelle Eigenschaften aufweisen;
wobei das Erzeugen der Überlagerungsbilder das Erzeugen eines oder mehrerer Überlagerungsbilder des mindestens einen Teils der virtuellen Umgebung in Abhängigkeit von den Ausrichtungsdaten umfasst; und
wobei der Schritt des Erzeugens der Überlagerungsbilder in Abhängigkeit von den Ausrichtungsdaten beim Bestimmen der Ausrichtungsdaten initiiert wird, während das Bild gerendert wird; und
Erzeugen (230) eines Bildes zur Anzeige, umfassend das gerenderte Bild und das eine oder die mehreren Überlagerungsbilder.

2. Verfahren nach Anspruch 1, wobei das Erzeugen des Bildes zur Anzeige das Überlagern des einen oder der mehreren Überlagerungsbilder über den mindestens einen Teil des gerenderten Bildes der virtuellen Umgebung umfasst, um den mindestens einen Teil des gerenderten Bildes der virtuellen Umgebung abzudecken.

3. Verfahren nach Anspruch 1 oder 2, wobei der Kontext des mindestens einen Teils der virtuellen Umgebung in dem gerenderten Bild in dem einen oder den mehreren Überlagerungsbildern erhalten bleibt.

4. Verfahren nach einem der vorstehenden Ansprüche, ferner umfassend das Auswählen eines oder mehrerer Objekte in der virtuellen Umgebung in Abhängigkeit von einem oder mehreren, ausgewählt aus der Liste bestehend aus: einer oder mehreren Eigenschaften der Objekte, einer Blickrichtung eines Benutzers, einer Anwendung, die dem zur Anzeige erzeugten Bild zugeordnet ist, einer Bildwiederholrate zum Erzeugen von Bildern zur Anzeige oder einer Benutzereingabe; wobei das Erhalten des einen oder der mehreren Überlagerungsbilder das Erhalten eines oder mehrerer Überlagerungsbilder des einen oder der mehreren ausgewählten Objekte umfasst.

5. Verfahren nach einem der vorstehenden Ansprüche, wobei die eine oder die mehreren visuellen Eigenschaften eines oder mehrere umfassen, ausgewählt aus der Liste bestehend aus: Auflösung, Textur, Farbgebung, Beleuchtung oder Kontrast.

6. Verfahren nach einem der vorstehenden Ansprüche, wobei das Erzeugen der Überlagerungsbilder das Transformieren des mindestens einen Teils des gerenderten Bildes der virtuellen Umgebung umfasst; wobei das Transformieren des mindestens einen Teils des gerenderten Bildes der virtuellen Umgebung umfasst: Übertragen eines Stils auf den mindestens einen Teil des gerenderten Bildes der virtuellen Umgebung, und/oder Hochskalieren des mindestens einen Teils des gerenderten Bildes der virtuellen Umgebung.

7. Verfahren nach einem der vorstehenden Ansprüche, wobei die Ausrichtungsdaten eines oder mehrere umfassen, ausgewählt aus der Liste bestehend aus: einer virtuellen Kamera-Position, die dem gerenderten Bild der virtuellen Umgebung zugeordnet ist, einem Netz von einem oder mehreren Objekten in dem mindestens einen Teil der virtuellen Umgebung oder einer Bildausrichtungskennung.

8. Verfahren nach einem der vorstehenden Ansprüche, wobei das Bestimmen des einen oder der mehreren Überlagerungsbilder des mindestens einen Teils der virtuellen Umgebung das Projizieren mindestens eines Überlagerungsbildes in Abhängigkeit von den Ausrichtungsdaten umfasst.

9. Verfahren nach einem der vorstehenden Ansprüche, wobei die virtuelle Umgebung eine virtuelle Umgebung eines Videospiels ist, und wobei das Bild zur Anzeige für einen Benutzer erzeugt wird, der das Videospiel spielt.

10. Computerprogramm, umfassend computerausführbare Anweisungen, die geeignet sind, um ein Computersystem zu veranlassen, das Verfahren nach einem der vorstehenden Ansprüche durchzuführen.

11. Datenverarbeitungssystem zum Erzeugen von Bildern einer virtuellen Umgebung, wobei das System umfasst:
einen Rendering-Prozessor (410), der konfiguriert ist, um ein Bild einer virtuellen Umgebung zu rendern, wobei das Rendern des Bildes der virtuellen Umgebung umfasst: Bestimmen von Ausrichtungsdaten, die sich auf eine Ausrichtung des gerenderten Bildes der virtuellen Umgebung beziehen, und Rendern des Bildes in Abhängigkeit von den Ausrichtungsdaten;
einen Überlagerungsprozessor (420), der konfiguriert ist, um ein oder mehrere Überlagerungsbilder von mindestens einem Teil der virtuellen Umgebung zu erzeugen, wobei die Überlagerungsbilder zum Überlagern über mindestens einen Teil des gerenderten Bildes der virtuellen Umgebung vorgesehen sind und der mindestens eine Teil des gerenderten Bildes der virtuellen Umgebung und das eine oder die mehreren Überlagerungsbilder eine oder mehrere unterschiedliche visuelle Eigenschaften aufweisen;
wobei das Erzeugen der Überlagerungsbilder das Erzeugen eines oder mehrerer Überlagerungsbilder des mindestens einen Teils der virtuellen Umgebung in Abhängigkeit von den Ausrichtungsdaten umfasst; und
wobei das Erzeugen der Überlagerungsbilder in Abhängigkeit von den Ausrichtungsdaten beim Bestimmen der Ausrichtungsdaten initiiert wird, während das Bild gerendert wird; und
einen Ausgabebildprozessor (430), der konfiguriert ist, um ein Bild zur Anzeige zu erzeugen, das das gerenderte Bild und das eine oder die mehreren Überlagerungsbilder umfasst.

## Revendications

1. Procédé de traitement de données permettant de générer des images d'un environnement virtuel, le procédé comprenant :
la restitution (210) d'une image d'un environnement virtuel, dans lequel la restitution de l'image de l'environnement virtuel comprend : la détermination de données d'orientation se rapportant à une orientation de l'image restituée de l'environnement virtuel, et la restitution de l'image en dépendance des données d'orientation ;
la génération (220) d'une ou plusieurs images de superposition d'au moins une partie de l'environnement virtuel, les images de superposition étant destinée à une superposition par-dessus au moins une partie de l'image restituée de l'environnement virtuel, et l'au moins une partie de l'image restituée de l'environnement virtuel et la ou les images de superposition ayant une ou plusieurs caractéristiques visuelles différentes ;
dans lequel la génération des images de superposition comprend la génération d'une ou plusieurs images de superposition de l'au moins une partie de l'environnement virtuel en dépendance des données d'orientation ; et
dans lequel l'étape de génération des images de superposition en dépendance des données d'orientation est initiée lorsqu'on détermine les données d'orientation, alors que l'image est en cours de restitution ; et
la génération (230) d'une image pour affichage comprenant l'image restituée et la ou les images de superposition.

2. Procédé selon la revendication 1, dans lequel la génération de l'image pour affichage comprend la superposition de la ou des images de superposition par-dessus l'au moins une partie de l'image restituée de l'environnement virtuel pour couvrir l'au moins une partie de l'image restituée de l'environnement virtuel.

3. Procédé selon la revendication 1 ou 2, dans lequel un contexte de l'au moins une partie de l'environnement virtuel dans l'image restituée est préservé dans la ou les images de superposition.

4. Procédé selon l'une quelconque revendication précédente, comprenant en outre la sélection d'un ou plusieurs objets dans l'environnement virtuel en dépendance d'un ou plusieurs sélectionnés dans la liste constituée par : une ou plusieurs propriétés des objets, une direction de regard d'un utilisateur, une application associée à l'image générée pour affichage, un débit de trame pour la génération des images pour affichage, ou une entrée utilisateur ; dans lequel l'obtention de la ou des images de superposition comprend l'obtention d'une ou plusieurs images de superposition du ou des objets sélectionnés.

5. Procédé selon l'une quelconque revendication précédente, dans lequel la ou les caractéristiques visuelles comprennent un ou plusieurs sélectionnés dans la liste constituée de : résolution, texture, coloration, clarté, ou contraste.

6. Procédé selon l'une quelconque revendication précédente, dans lequel la génération des images de superposition comprend la transformation de l'au moins une partie de l'image restituée de l'environnement virtuel ; dans lequel la transformation de l'au moins une partie de l'image restituée de l'environnement virtuel comprend : le transfert d'un style à l'au moins une partie de l'image restituée de l'environnement virtuel, et/ou la mise à l'échelle supérieure de l'au moins une partie de l'image restituée de l'environnement virtuel.

7. Procédé selon l'une quelconque revendication précédente, dans lequel les données d'orientation comprennent un ou plusieurs sélectionnés dans la liste constituée de : une position de caméra virtuelle associée à l'image restituée de l'environnement virtuel, un maillage d'un ou plusieurs objets dans l'au moins une partie de l'environnement virtuel, ou un identificateur d'orientation d'image.

8. Procédé selon l'une quelconque revendication précédente, dans lequel la détermination de la ou des images de superposition de l'au moins une partie de l'environnement virtuel comprend la projection d'au moins une image de superposition en dépendance des données d'orientation.

9. Procédé selon l'une quelconque revendication précédente, dans lequel l'environnement virtuel est un environnement virtuel d'un jeu vidéo, et dans lequel l'image est générée pour affichage à un utilisateur jouant au jeu vidéo.

10. Programme d'ordinateur comprenant des instructions exécutables par ordinateur conçues pour amener un système d'ordinateur à mettre en œuvre le procédé selon l'une quelconque revendication précédente.

11. Système de traitement de données permettant de générer des images d'un environnement virtuel, le système comprenant :
un processeur de restitution (410) configuré pour restituer une image d'un environnement virtuel, dans lequel la restitution de l'image de l'environnement virtuel comprend : la détermination de données d'orientation se rapportant à une orientation de l'image restituée de l'environnement virtuel, et la restitution de l'image en dépendance des données d'orientation ;
un processeur de superposition (420) configuré pour générer une ou plusieurs images de superposition d'au moins une partie de l'environnement virtuel, les images de superposition étant destinées à une superposition par-dessus au moins une partie de l'image restituée de l'environnement virtuel, et l'au moins une partie de l'image restituée de l'environnement virtuel et la ou les images de superposition ayant une ou plusieurs caractéristiques visuelles différentes
dans lequel la génération des images de superposition comprend la génération d'une ou plusieurs images de superposition de l'au moins une partie de l'environnement virtuel en dépendance des données d'orientation ; et
dans lequel la génération des images de superposition en dépendance des données d'orientation est initiée lorsqu'on détermine les données d'orientation, alors que l'image est en cours de restitution ; et
un processeur d'image de sortie (430) configuré pour générer une image pour affichage comprenant l'image restituée et la ou les images de superposition.
